# FASCICULE DE BREVET EUROPEEN

(11) **EP 2 755 890 B1**
(45) Date de publication et mention de la délivrance du brevet: **06.11.2019**
(21) Numéro de dépôt: 12756765.9
(22) Date de dépôt: 13.09.2012
(51) Int. Cl.: B64F 1/18, B64F 1/20, G01J 1/02

(54) **ÉQUIPEMENT MOBILE DE CONTRÔLE DES FEUX DE BALISAGE AÉROPORTUAIRE**
MOBILE VORRICHTUNG ZUR ÜBERPRÜFUNG DER PISTENBEFEUERUNG AUF FLUGHÄFEN
MOBILE DEVICE FOR CHECKING AIRPORT RUNWAY LIGHTS

(30) Priorité: 13.09.2011 FR 1158165
(43) Date de publication de la demande: 23.07.2014
(73) Titulaire: FB Technology, 91000 Evry (FR)
(72) Inventeur: LE CAM, Lionel, F-91370 Verrieres le Buisson (FR)
(74) Mandataire: Vidon Brevets & Stratégie
(86) Numéro de dépôt international: PCT/EP2012/068011
(87) Numéro de publication internationale: WO 2013/037921

(56) Documents cités:
- EP-A1- 1 366 989
- GB-A- 1 454 272

## Description

### 1. Le domaine de l'invention

La présente invention concerne le contrôle des feux de balisage aéroportuaire. Plus précisément, la présente invention présente un équipement mobile de mesure des caractéristiques photométriques de ces feux.

### 2. Art antérieur

Les plates-formes aéroportuaires sont équipées de feux de balisage constituant des aides visuelles nécessaires au bon déroulement des phases d'atterrissage, de décollage et de roulage des avions. Ces feux de balisage permettent d'assurer la sécurité des personnes et des avions, y compris et surtout dans des conditions de mauvaise visibilité. Ils doivent correspondre à des normes fixées par l'Organisation de l'Aviation Civile Internationale (OACI), qui imposent d'une part des performances techniques minimum, et d'autre part des conditions d'entretien de ces feux de balisage. Ces performances et ces conditions d'entretien sont définies différemment selon la fonction du feu de balisage sur le site aéroportuaire - par exemple fonction d'axe de piste balisant l'axe de la piste, fonction « Touch Down Zone » (Zone de Toucher des Roues) balisant l'emplacement sur la piste où les avions sont sensés atterrir, etc...

Ainsi, l'OACI impose que les caractéristiques photométriques de ces feux de balisage, et notamment leur intensité moyenne dans leur faisceau principal, leur ouverture de faisceau et leur calage en site et en azimut, soient régulièrement contrôlées. En effet, l'intensité lumineuse d'un feu de balisage doit toujours être supérieure à 50% de la valeur nominale spécifiée par l'OACI, et les angles d'ouverture du faisceau lumineux émis par le feu de balisage doivent toujours être supérieurs aux limites spécifiées. De même, le calage du faisceau doit correspondre au standard OACI défini pour la fonction mesurée.

L'OACI impose également une obligation de contrôle photométrique des feux de balisage. La fréquence de contrôle, qui ne peut être inférieure à deux fois par an pour les feux encastrés et une fois par an pour les autres feux, peut être plus importante pour certaines plates-formes aéroportuaires, en raison de leur trafic aérien ou des conditions environnementales (pollution, poussière, air salin etc.).

Par ailleurs, l'OACI ou les autorités nationales peuvent imposer des peines de restriction ou de perte de l'exploitation aux plates-formes aéroportuaires présentant une trop forte proportion de feux déclarés hors service, c'est-à-dire dont l'intensité moyenne de faisceau principal est inférieure à 50 % de la valeur nominale. De même, le fait que deux feux adjacents sur un axe de piste soient déclarés hors service entraîne automatiquement la suspension de l'autorisation d'accueil des avions sur la plate-forme aéroportuaire en période de basse visibilité.

On connaît, du document GB 1 454 272, un équipement mobile de feux de balisage pouvant être placé à l'arrière d'un véhicule. Cet équipement comporte plusieurs capteurs photométriques disposés verticalement. Il est déplacé au dessus d'un feu de balisage et, après s'être éloigné de ce feu d'une distance prédéterminée, enregistre les mesures effectuées par les capteurs.

Du fait de la répartition verticale de ses capteurs, cet équipement ne permet de mesurer que certaines des caractéristiques du faisceau lumineux. Il ne peut ainsi pas mesurer l'ouverture ni le calage en azimut. De plus, le faible nombre de mesures permises par cet équipement (six mesures par feu de balisage) ne permet qu'une mesure très grossière des caractéristiques du feu. Par ailleurs, les valeurs mesurées sont très dépendantes de l'alignement correct des capteurs sur le faisceau lumineux, au moment de la mesure. Enfin, vu la conformation de l'équipement, il ne peut être utilisé que pour contrôler les feux d'axe de piste, par dessus lesquels il est possible de circuler, mais pas les feux latéraux, qui sont généralement surélevés.

On connaît également, du document EP 1 366 989, un autre équipement mobile de feux de balisage, dans lequel le faisceau lumineux est reçu par un écran vertical. Là encore, l'équipement est déplacé au dessus d'un feu de balisage et, après s'être éloigné de ce feu d'une distance prédéterminée, des capteurs mesurent la lumière reçue par l'écran. Si l'écran, à cette distance, reçoit normalement la lumière correspondant à tout le faisceau, le nombre de mesures effectuées pour chaque feu est égal au nombre de capteurs utilisés. Un tel équipement contient donc de très nombreux capteur, et est donc cher. Par ailleurs, le nombre de mesures effectuées pour chaque feu reste malgré tout relativement limité, et ne permet pas une mesure suffisamment précise des caractéristiques du feu. Enfin, cet équipement est relativement encombrant, et il est délicat de l'utiliser pour le contrôle de feux surélevés.Pour répondre aux besoins de contrôle photométrique des feux de balisage des plates-formes aéroportuaires, la Demanderesse a développé un équipement mobile de mesure de caractéristiques photométriques fiable, précis et simple d'utilisation. Cet équipement mobile de contrôle, ou de mesure, permet de mesurer précisément les caractéristiques des feux de balisage pour les pistes et voies de circulation des plates-formes aéroportuaires, et de donner des informations pour aider à la maintenance de ces feux.

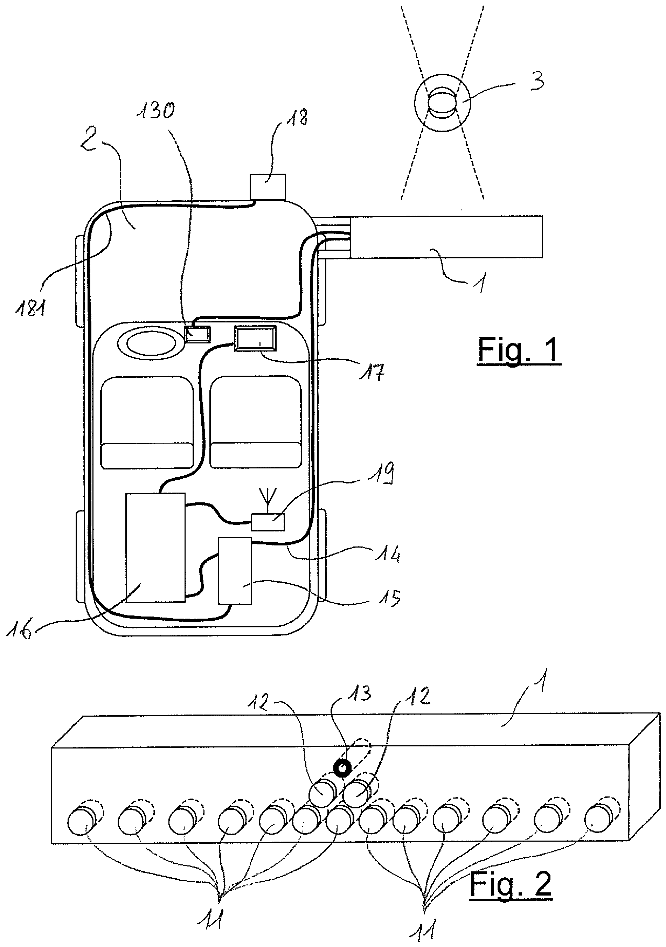

Ce dispositif de mesure de l'art antérieur est représenté schématiquement par la figure 1. Il comprend principalement un barreau de mesure 1 porté par un véhicule automobile 2 ou une remorque, des moyens de mesure de la distance entre le barreau et les feux mesurés, et un équipement informatique placé dans le véhicule automobile 2 ou sur la remorque.

Le barreau de mesure 1, qui est constitué d'un boîtier métallique, porte une pluralité de capteurs photométriques répartis sur sa longueur comme le représente plus en détail la figure 2. Il doit être déplacé au-dessus de chacun des feux de balisage 3 à contrôler, et peut ainsi mesurer l'intensité du faisceau lumineux émis par le feu de balisage pendant qu'il approche de celui-ci, ce qui permet par la suite de calculer l'intensité, l'ouverture et le calage de ces faisceaux, alors que le barreau de mesure est déplacé au-dessus des feux 3 à une vitesse pouvant aller jusqu'à 80 km/h. Dans la suite de la description, les faces des barreaux de mesure destinées à être orientée vers l'avant, vers l'arrière et vers le bas, lors du déplacement normal du véhicule portant ces barreaux seront désignées respectivement « face avant », « face arrière » et « face inférieure ».

Pour permettre une mesure correcte des caractéristiques du feu de balisage 3, le barreau de mesure 1 représenté à la figure 2 comprend classiquement :
- treize capteurs photométriques - appelés capteurs de mesures -11 dirigés vers l'avant et alignés selon une direction horizontale, répartis sur la face avant du barreau ;
- deux capteurs photométriques - appelés capteurs de couleur ou colorimétriques -12, sur la face avant du barreau et dirigés vers l'avant et équipés chacun d'un filtre de couleur différente, de façon à identifier la couleur du feu (dans certaines configurations, ces capteurs de couleur peuvent être remplacés par un spectrophotomètre capable de donner les caractéristiques chromatiques de la lumière mesurée) ;
- onze capteurs photométriques appelés capteurs de détection de feu, sur la face inférieure du barreau et dirigés vers le bas (non visibles sur les figures), destinés à détecter l'instant où le barreau de mesure 1 passe au-dessus du feu de balisage 3 ;
- une caméra 13, transmettant une image à un moniteur vidéo 130 situé devant le conducteur du véhicule 2, afin de lui permettre de diriger facilement le véhicule suivant une trajectoire permettant une mesure correcte.

Chacun des capteurs photométriques émet en permanence un signal analogique correspondant aux valeurs de flux lumineux reçu par unité de surface (mesurée en lux) dans le faisceau mesuré. Cependant, comme la norme OACI définit l'intensité lumineuse des feux en candela, il est nécessaire de connaître la distance entre les capteurs et le feu mesuré.

Pour cela, des moyens de mesures du déplacement du véhicule permettant de calculer la distance entre le feu mesuré 3 et le barreau 1 où les valeurs de flux lumineux (en lux) sont mesurés et mémorisés, permettant la conversion en candela de la mesure. Ces moyens de mesure, qui sont connus en eux-mêmes, peuvent être par exemple constitués par une roue de mesure, roulant sur le sol et dont le nombre de tour est compté.

Dans le mode de réalisation représenté à la figure 1, ces moyens de mesure sont constitués par un radar Doppler 18 qui mesure en permanence la vitesse de déplacement du véhicule. Au moment où le barreau de mesure 1 passe au dessus du feu 3, les capteurs de détection de feu envoient un signal correspondant à ce passage. Un calcul basé sur les vitesses de déplacement mesurées précédemment permet alors de déduire quelle était la distance entre le barreau et le feu lors des mesures de flux lumineux effectuées précédemment. Ces mesures de flux lumineux peuvent alors être associées aux distances correspondantes pour calculer l'intensité lumineuse du feu.

Ainsi, les mesures de l'intensité lumineuse du feu ne sont pas mesurées à une distance donnée du feu, comme le prévoient les documents GB 1 454 272 ou EP 1 366 989, mais de façon continue, ou quasi-continue, au fur et à mesure que le barreau de mesure s'approche du feu. Ce procédé permet donc une mesure très précise des caractéristiques du feu. Cependant, les mesures effectuées génèrent une très grande quantité de données à traiter, bien supérieures aux données générées par les équipements des documents GB 1 454 272 ou EP 1 366 989.

Les signaux émis par les capteurs photométriques sont transmis par un système de câbles 14 à un boîtier d'interface 15 situé dans le véhicule 2 qui permet le traitement de tous les signaux et leur transmission à un ordinateur 16 situé également dans le véhicule 2. Cet ordinateur est relié à un écran tactile 17 permettant à un opérateur installé dans le véhicule de contrôler le déroulement du contrôle des feux de balisage. De même, les signaux émis par les moyens de mesure du déplacement, et plus précisément du radar Doppler 18, sont transmis au boîtier d'interface 15 par un système de câble 181.

Enfin, un récepteur de géolocalisation 19, par exemple selon la norme GPS (pour « Global Positioning System », signifiant « Système de positionnement global »), peut être également relié à l'ordinateur 16. Ce récepteur GPS donne la localisation (latitude et longitude) de chacun des feux mesurés et permet d'associer les caractéristiques photométriques d'un feu à ses coordonnées, ce qui permet par la suite de les associer au feu présentant les mêmes coordonnées dans la base de données de l'aéroport. Ce récepteur de géolocalisation est optionnel et n'est pas strictement nécessaire à l'utilisation de l'équipement mobile de mesure. Cependant, il permet avantageusement de réaliser des statistiques sur les performances des feux, ou de guider plus facilement des opérateurs vers les lieux où des interventions de maintenance doivent être réalisées.

L'installation du barreau de mesure 1 sur un véhicule 2 peut être faite relativement rapidement, en une dizaine de minutes, quand le véhicule 2 est équipé d'une structure de support adéquate. Cependant, cette installation nécessite le branchement d'un grand nombre de câbles reliant notamment le barreau de mesure 1 au boîtier d'interface 15 situé dans le véhicule.

Ainsi, la connexion entre le barreau de mesure 1 et le boîtier d'interface 15 doit être réalisée par un câble multibrins comprenant soixante-deux fils et suppose donc le branchement de prises comprenant soixante-deux points de connexions, qui sont particulièrement fragiles et dont la fiabilité est d'autant plus limitée que l'équipement mobile de mesure peut être amené à être souvent déconnecté et reconnecté.

De plus, ce câble multibrins peut être soumis, entre le barreau de mesure 1 et le boîtier d'interface 15, à des perturbations électromagnétiques générées par les différents instruments et appareils présents sur la plate-forme aéroportuaire. Ces perturbations électromagnétiques peuvent générer des interférences faussant les mesures de luminosité des feux de signalisation. L'utilisation d'un câble blindé permet normalement de limiter ces interférences, sans toutefois les supprimer totalement. Par ailleurs, chacun des éléments du dispositif de mesure doit être alimenté en électricité, les capteurs photométriques et le capteur de mesure de distance pouvant être alimentés directement avec la tension continue 12V fournie par la batterie du véhicule, et le boîtier d'interface et l'ordinateur devant être alimentés en courant alternatif 220V qui doit être fourni par un convertisseur adapté.

Ainsi, un grand nombre de connecteurs et de câbles devant être connectés, l'installation du dispositif de contrôle sur le véhicule nécessite de nombreuses manipulations, qui peuvent entraîner de mauvaises installations, par l'oubli d'une connexion, ou par un mauvais contact dans un connecteur. Ces multiples connexions réduisent alors la fiabilité de l'équipement mobile de mesure.

Par ailleurs, il arrive que l'ordinateur affecté au traitement des données soit ralenti ou bloqué par une erreur informatique, ne permettant alors pas de traiter en temps réel toutes les données venant des capteurs. De tels aléas obligent alors à répéter une série de mesures.

Il est à noter que les problèmes liés au transfert et au traitement des données, qui se posent pour ce barreau de mesure de l'art antérieur, ne se posent pas pour les équipements de mesure des documents GB 1 454 272 ou EP 1 366 989. En effet, les mesures des caractéristiques d'un feu avec ces équipements étant moins précises, la quantité des données à traiter est bien plus faible.

Enfin de nombreux feux étant bidirectionnels, il est nécessaire pour les contrôler d'effectuer deux passages, dans des sens différents, au-dessus des feux. Une piste de zone aéroportuaire comportant généralement plusieurs alignements de feux, le contrôle de tous ces feux nécessite un grand nombre de passages sur les pistes du véhicule portant le barreau de mesure, ce qui rend difficile le déroulement des mesures sachant que l'utilisation de ces pistes pour le décollage, l'atterrissage ou la circulation d'avions est bien entendu prioritaire.

### 3. Objectifs de l'invention

La présente invention a pour objectif de palier à ces inconvénients de l'art antérieur.

En particulier, l'invention a pour objectif, selon au moins certains des modes de réalisation, de fournir un équipement mobile de contrôle de feux dont l'installation dans un véhicule soit plus facile, plus rapide et plus fiable que dans l'art antérieur.

Un objectif particulier de l'invention est de fournir un tel équipement mobile qui, selon au moins certains modes de réalisation, soit moins sensible aux perturbations électromagnétiques.

Un autre objectif de l'invention est, selon au moins certains des modes de réalisation, de fournir un tel équipement mobile qui permette un contrôle plus rapide des feux de balisage, afin limiter le temps de non-utilisation des pistes.

L'invention a encore pour objectif de fournir un tel équipement mobile de contrôle qui soit moins encombrant, plus fiable et plus efficace que ceux de l'art antérieur.

### 4. Exposé de l'invention

Ces objectifs ainsi que d'autres qui apparaîtront plus clairement par la suite sont atteints à l'aide d'un équipement mobile selon la revendication 1.

Ainsi, dans cet équipement de mesure, les capteurs photométriques ne mesurent pas la lumière émise par le feu à une distance donnée de feu, mais au cours du déplacement du barreau dans le faisceau lumineux émis par le feu. Pendant ce déplacement, plusieurs mesures sont donc effectuées par les capteurs photométriques. De préférence, ces mesures sont continues ou quasi-continues pendant certain intervalle de temps, afin d'obtenir une mesure très précise des caractéristiques photométriques du feu.

La génération d'un ensemble de données représentatives de caractéristiques photométriques de chaque feu contrôlé par les moyens d'acquisition et de traitement se fait donc à partir des signaux émis par ledit ou lesdits capteurs photométriques à plusieurs moment différents, correspondant chacun à des distances différentes entre le barreau et le feu.

Le traitement des signaux étant réalisé dans le barreau, il n'est plus nécessaire d'envoyer à un ordinateur situé dans le véhicule, en dehors du barreau, les très nombreux signaux émis par les capteurs. L'encombrement résultant de l'installation de l'ordinateur dans le véhicule est évité, et les connectiques entre le véhicule et le barreau, qui présente de préférence des moyens de solidarisation au véhicule, sont ainsi simplifiées, ce qui permet que l'installation sur le véhicule de l'équipement mobile de contrôle de feux soit plus facile, plus rapide et plus fiable que dans l'art antérieur.

Ainsi, un équipement mobile de contrôle selon l'invention est moins encombrant, plus fiable et plus efficace que ceux de l'art antérieur.Avantageusement, ledit barreau de mesure constitue une cage de Faraday protégeant lesdits capteurs et/ou lesdits moyens d'acquisition et de traitement des rayonnements électromagnétiques.

Ainsi, le traitement dans le barreau lui-même, qui est un boîtier préférentiellement métallique, des signaux analogiques générés par les capteurs rend les mesures moins sensibles aux perturbations électromagnétiques.

De préférence, ledit ensemble de données représentatives de caractéristiques photométriques de chaque feu contrôlé est un signal de type numérique.

Un tel signal numérique, préférentiellement binaire, est moins sensible aux perturbations électromagnétiques qu'un signal analogique.

Avantageusement, ledit barreau de mesure porte des moyens de transmission desdits ensembles de données vers un ordinateur permettant l'enregistrement desdits ensembles de données et/ou l'interface avec un utilisateur.

Cet ordinateur n'a pas, contrairement à l'art antérieur, de fonction d'acquisition des données. Il peut avantageusement être une tablette tactile, qui constitue une interface particulièrement facile d'utilisation pour l'opérateur situé dans le véhicule.

Selon un mode de réalisation préférentiel, lesdits moyens de transmission sont des moyens de transmission radio.

Ainsi, les connectiques entre le barreau et l'ordinateur permettant l'enregistrement desdits ensembles de données et/ou l'interface avec un utilisateur sont supprimées, ce qui permet une installation encore plus facile de l'équipement mobile de contrôle dans le véhicule.

Avantageusement, lesdits moyens d'émission radio sont constitués par un émetteur radio répondant à une norme « Wi-Fi » (marque déposée).

Un tel émetteur radio permet une liaison facile avec l'ordinateur qui peut être situé dans le véhicule ou n'importe où sur la plateforme aéroportuaire suivant la portée de l'émission radio considérée.

Selon l'invention ledit barreau de mesure comprend une pluralité de capteurs photométriques orientés vers l'avant.

Ce barreau permet ainsi la mesure de caractéristiques photométriques d'un feu pendant qu'il s'approche de celui-ci dans son faisceau lumineux, avant de passer au dessus du feu.

Cette méthode de mesure vers l'avant permet à l'opérateur présent dans le véhicule de compléter le contrôle des feux de balisage par un contrôle visuel, effectué dans des conditions proches de celles des pilotes ou des contrôleurs de piste circulant sur les pistes. Par ailleurs, quand le contrôle des feux de balisage se fait sur une piste mouillée, la mesure des caractéristiques photométriques vers l'avant évite les perturbations dues au nuage des projections d'eau se formant à l'arrière du véhicule.

Selon l'invention, ledit barreau de mesure comprend en outre une pluralité de capteurs photométriques orientés vers l'arrière.

Ainsi, ce barreau peut mesurer en un seul passage les caractéristiques de feux éclairant dans la direction opposée à son déplacement et dans la direction de son déplacement. Il permet ainsi de réaliser un plus grand nombre de mesures avec un nombre réduit de passages sur la piste. Ainsi, un tel barreau permet de minimiser le temps pendant lequel la piste est rendue inutilisable pour les avions. Ces mesures se font de préférence par l'intermédiaire de capteurs photométriques distincts, mais en utilisant les données des mêmes moyens de mesure de la distance entre le barreau de mesure et les feux à contrôler

Avantageusement, ledit barreau de mesure comprend au moins un capteur photométrique de détection de feux orienté vers le bas.

Ce capteur de détection de feux permet de déterminer de façon très précise la position des feux à contrôler, lors du passage de l'équipement mobile de contrôle au dessus des feux.

De façon préférentielle, lesdits moyens de mesure de la distance entre ledit barreau de mesure et les feux à contrôler comprennent ledit capteur photométrique de détection de feux et des moyens de mesure de la vitesse de déplacement dudit barreau de mesure.

La combinaison des capteurs de détection de feux et des moyens de mesure de la vitesse permet de calculer très précisément la distance entre le feu et le barreau, à chaque instant. La détermination précise de cette distance est indispensable pour déterminer si les caractéristiques photométriques des feux sont conformes aux normes en vigueur. Il est à noter que ces moyens de mesure de la distance entre le barreau de mesure et les feux ne peuvent pas être remplacés par un dispositif de géolocalisation, par exemple de type GPS. En effet ces dispositifs de géolocalisation ne permettent pas d'obtenir une précision de mesure suffisante pour permettre le calcul précis des caractéristiques photométriques des feux.

Avantageusement, ledit barreau de mesure comprend des moyens d'analyse colorimétrique des feux contrôlés.

De façon avantageuse, lesdits moyens de traitement sont constitués par un automate programmable industriel placé dans ledit barreau de mesure.

Selon un mode de réalisation avantageux, l'équipement mobile de contrôle comprend un récepteur de géolocalisation, permettant d'associer chaque ensemble de données représentatif des caractéristiques photométriques d'un feu aux coordonnées de géolocalisation de ce feu.

De tels récepteurs de géolocalisation ne sont pas indispensables et ne peuvent pas remplacer les moyens de mesure de la distance entre le barreau de mesure et les feux. Cependant, ils peuvent avantageusement permettre d'identifier les feux mesurés en comparant leurs coordonnées avec celles enregistrées dans une base de données, et de guider le véhicule portant l'équipement mobile de contrôle vers les feux à contrôler.

Préférentiellement, ledit barreau de mesure comprend une pluralité de capteurs photométriques placés dans un même plan sensiblement horizontal.Cette disposition des capteurs permet que le barreau s'étende essentiellement horizontalement. Il est ainsi facile d'associer ce barreau à un véhicule, notamment en le fixant au véhicule par l'une de ses extrémités, de telle sorte qu'il soit maintenu en porte-à faux à coté du véhicule. Cette disposition permet de mesurer plus facilement les caractéristiques de feux surélevés.

### 5. Liste des figures

D'autres caractéristiques et avantages de l'invention apparaîtront à la lecture de la description suivante de modes de réalisation préférés, donnés à titre de simples exemples illustratifs et non-limitatifs, et des figures annexées parmi lesquelles :
- les figures 1 et 2, qui ont été commentées ci-dessus, sont des représentations schématiques respectivement d'un véhicule équipé d'un équipement mobile de contrôle de feux de balisage selon un art antérieur, et du barreau de mesure de cet équipement de l'art antérieur ;
- la figure 3 est une représentation schématique d'un véhicule équipé d'un équipement de contrôle de feux de balisage selon un premier mode de réalisation de l'invention ;
- la figure 4 est une vue de dessus schématique d'un exemple du barreau de mesure de l'équipement de contrôle de la figure 3 ; ne faisant pas partie de l'invention.
- la figure 5 est une vue de dessus schématique d'un barreau de mesure selon l'invention, pouvant être mis en œuvre dans l'équipement de contrôle de la figure 3 en remplacement du barreau de la figure 4.

### 6. Description de modes de réalisation

### Transmission améliorée de données

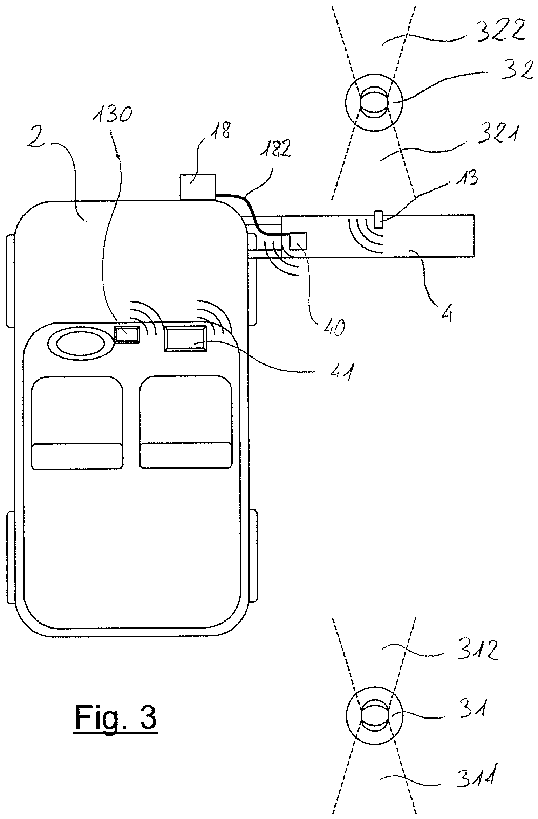

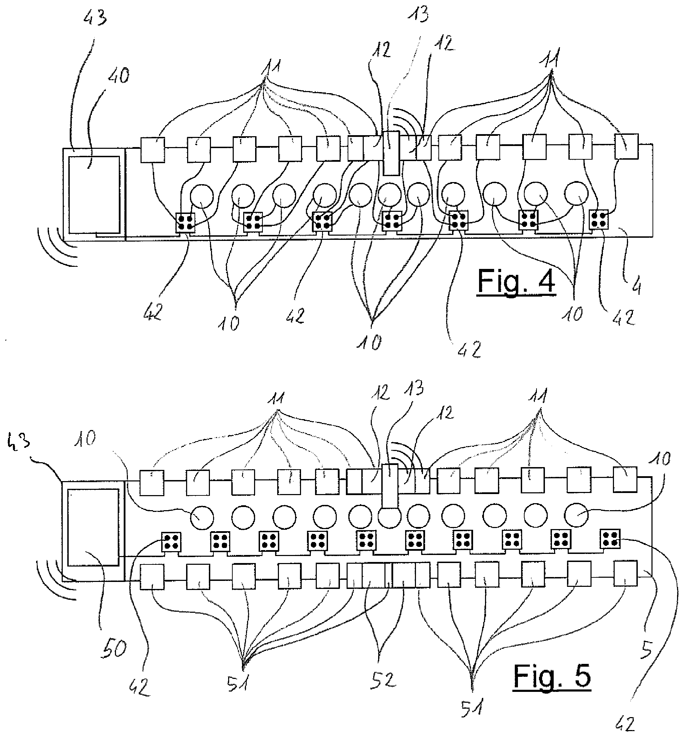

La figure 3 représente de façon schématique un véhicule 2 équipé d'un équipement de contrôle de feux de balisage selon un premier mode de réalisation de l'invention. Cet équipement de contrôle comporte un barreau de mesure 4, et un radar Doppler 18 porté par le véhicule 2. Le barreau de mesure 4 comporte un boîtier, de préférence métallique pour former une cage de Faraday. Il est représenté schématiquement en vue de dessus à la figure 4, sans sa face supérieure (couvercle) de façon à ce que les éléments placés à l'intérieur du boîtier soient visibles.

La face avant du barreau de mesure 4 porte, comme dans le barreau de mesure 1 de l'art antérieur, une pluralité de capteurs photométriques 11 (capteurs de mesure) placés le long d'une ligne horizontale, des capteurs photométriques 12 équipés de filtres colorés (capteurs de couleur) pour déterminer les caractéristiques colorimétriques des feux et identifier la couleur du faisceau, et une caméra 13 permettant au conducteur du véhicule 2 de suivre facilement la meilleure trajectoire pour contrôler les feux.

Il est à noter que, selon une variante possible, le maintien de la bonne trajectoire pourrait être réalisé en utilisant des systèmes existants d'aide au guidage et à la conduite de véhicules.

Il est à noter, de plus, que, selon une autre variante possible, le capteur de couleur peut être constitué par un module spectro-colorimètre donnant les coordonnées chromatiques du faisceau du feu de balisage.

Le barreau 4 comprend également une pluralité de capteurs photométriques 10, appelé capteurs de détection des feux, qui sont portés par la face inférieure du barreau et dirigés vers le bas. Ces capteurs de détection permettent de déterminer l'instant où le barreau 4 passe au-dessus d'un feu.

Pendant que le barreau 4 est approché du feu à contrôler, les capteurs de mesure 11 orientés vers l'avant sont éclairés par le faisceau lumineux. Ils mesurent alors, de façon continue, l'éclairage qu'il reçoivent, qui évolue au cours du déplacement du barreau dans le faisceau lumineux émis par le feu.

L'évolution de l'éclairage de ces capteurs au cours de l'approche du feu permet de déduire les caractéristiques photométriques recherchées, si l'on connaît la distance du feu pour chaque mesure. Cette distance n'est exactement connue qu'après le passage du barreau au dessus du feu, grâce aux capteurs de détection 10 et aux moyens de mesure de la distance entre le barreau et le feu mesuré.

Chacun des capteurs photométriques portés par ce barreau de mesure 4 émet au cours du déplacement un signal analogique par l'intermédiaire d'un câble de connexion branché sur un module d'interface 42. Ces modules d'interface 42, qui peuvent chacun être connectés à quatre capteurs, fournissent l'alimentation électrique de ces capteurs, et convertissent leur signal analogique en un signal binaire qu'ils transmettent par un câble réseau à un automate industriel programmable 40, qui est placé dans un compartiment étanche 43, à une extrémité du barreau 4. Par ailleurs, le radar Doppler 18 est également connecté à cet automate industriel programmable 40, par l'intermédiaire d'un câble 182.

Le signal binaire transmis, s'il n'est pas continu au cours du déplacement comme le signal analogique émis par les capteurs, est cependant quasi-continu. Ainsi, l'automate industriel programmable 40 reçoit de préférence une mesure de chacun des capteurs chaque fois que le barreau a parcouru une distance d'environ deux centimètres. Ainsi, la mesure par les capteurs se fait au cours du déplacement du barreau, c'est à dire à plusieurs moments de son déplacement, et non à un moment donné de ce déplacement.

Cet automate 40 est programmé pour traiter l'ensemble des données provenant des différents capteurs photométriques 10 et 11, et du radar Doppler, afin de générer un ensemble de données représentatif des caractéristiques de chaque feu de balisage mesuré. La génération d'un ensemble de données représentatives de caractéristiques photométriques de chaque feu contrôlé par les moyens d'acquisition et de traitement se fait donc à partir des signaux émis par ledit ou lesdits capteurs photométriques à plusieurs moment différents (et de préférence à de très nombreux moments), correspondant chacun à des distances différentes entre le barreau et le feu.Ces ensembles de données, qui sont préférentiellement sous forme numériques, sont ensuite transmis de l'automate 40 vers un ordinateur de contrôle et de supervision pouvant être par exemple du type tablette tactile 41, qui est manipulée par un opérateur se trouvant dans le véhicule 2 ou à proximité de celui-ci.

Selon une solution préférée, l'automate industriel 40 comporte un module de communication radio, préférablement selon la norme WI-FI (marque déposée), permettant la transmission des ensembles de données représentatives des caractéristiques des feux vers l'ordinateur 41. Ainsi, il n'est plus nécessaire de brancher de câble entre l'ordinateur 41 et l'automate 40. Selon une variante possible, la liaison entre l'automate 40 et l'ordinateur 40 peut également être assurée par un câble de type communication réseau.

Cet ordinateur 41 n'a donc pas pour fonction de traiter les signaux de type analogique fournis par les différents capteurs, mais uniquement d'enregistrer les informations utiles concernant les feux, qui sont issues du traitement des signaux des capteurs par l'automate industriel 40, et de permettre l'accès à ces informations par l'opérateur, à partir de ses interfaces d'entrées/sorties, par l'intermédiaire d'un logiciel dédié.

La présence dans le barreau 4 de l'automate industriel 40, qui effectue l'acquisition et le traitement des données analogiques provenant des capteurs photométriques, permet de limiter très fortement l'impact des perturbations électromagnétiques sur les mesures. En effet, le boîtier du barreau 4 forme une cage de Faraday protégeant efficacement les capteurs, les câbles de connexion, les modules d'interface 42 et l'automate 40 contre les perturbations électromagnétiques. Après le traitement par l'automate 40, les ensembles de données représentatives des caractéristiques des feux, qui sont transmis à l'ordinateur, sont sous forme numériques et non analogiques, ce qui les rend beaucoup moins sensibles aux perturbations électromagnétiques.

Par ailleurs, chacun des éléments mis en œuvre dans cet équipement de contrôle est conçu pour être alimenté par une tension continue de 12V ou de 24V. Cette alimentation peut donc être réalisée facilement, soit directement par le circuit électrique du véhicule, soit par l'intermédiaire d'un module convertisseur protégé unique.

Il est à noter que, dans le cas particulier des alignements de feux de balisage disposés en travers d'une piste ou d'une voie de circulation (perpendiculairement à l'axe de la piste ou voie) et éclairant à l'axe de la piste ou voie, le contrôle peut se faire en suivant une autre méthode : le barreau est porté verticalement par le véhicule, ses capteurs photométriques dirigés vers les feux à mesurer, et il est déplacé par le véhicule parallèlement à l'alignement des feux (et donc perpendiculairement à l'axe de la piste ou voie), à une distance donnée de ces feux. Cette méthode de contrôle, qui ne concerne qu'une faible proportion des feux d'une plate-forme aéroportuaire, est rendue possible par l'utilisation du barreau, qui peut facilement être assemblé au véhicule dans la position appropriée, ses capteurs photométriques dirigés dans la direction souhaitée.

S'il est utile de mettre en œuvre un récepteur de géolocalisation, par exemple selon la norme GPS (pour « Global Positioning System », signifiant « Système de positionnement global »), ce récepteur peut être porté par le barreau 4 et connecté à l'automate 40, par l'intermédiaire d'un port série, d'un port répondant à la norme USB (pour « Universal Serial Bus », signifiant « bus série universel »), ou d'une liaison radio (Par exemple selon une norme de type « Bluetooth » ou « WiFi »). Dans ce cas, les informations de géolocalisation, relevées notamment au moment où les capteurs de détection détectent la position d'un feu, afin d'identifier précisément ce feu, peuvent être inclues dans les ensembles de données représentatives des caractéristiques des feux envoyés par l'automate 40 à l'ordinateur 41.

Selon un autre mode de réalisation possible, le récepteur de géolocalisation peut être connecté directement à l'ordinateur 41. Dans ce cas, l'ordinateur peut enregistrer les données de géolocalisation au moment où il reçoit le signal unique émis par l'automate, afin d'associer à ce signal les coordonnées du feu contrôlé.

La caméra 13, selon le mode de réalisation représenté, n'est pas connectée à l'automate 40, mais comporte des moyens d'émission radio propre lui permettant d'émettre vers un récepteur vidéo 130 situé dans le champ de vision du conducteur du véhicule 13. Alternativement, la caméra 13 peut être connectée par câble au récepteur vidéo 130.

L'équipement mobile de contrôle des feux de balisage représenté par les figures 3 et 4 présente ainsi de nombreux avantages par rapport à l'équipement de contrôle de l'art antérieur. Il permet en effet une diminution sensible du nombre de câbles circulant dans le véhicule 2 équipé, et donc une diminution très importante du nombre de branchements à effectuer pour l'installation de l'équipement dans le véhicule. Cette diminution du nombre de branchements réduit de façon importante les risques d'erreur de connexion ou de faux contacts. Par ailleurs, elle réduit la sensibilité de l'équipement de mesure aux perturbations électromagnétiques.

### Contrôle bidirectionnel des feux

Selon l'invention, le barreau 4 est remplacé dans l'équipement de contrôle de feux de balisage représenté à la figure 3 par un barreau de mesure 5 tel que représenté par la figure 5. Ce barreau 5 comporte également un boîtier, de préférence métallique pour former une cage de Faraday. Il est représenté schématiquement en vue de dessus, sans sa face supérieure (couvercle) de façon à ce que les éléments placés à l'intérieur du boîtier soient visibles.

Comme dans le barreau 4 de la figure 4 et le barreau de mesure 1 de l'art antérieur, la face avant du barreau de mesure 5 porte une pluralité de capteurs photométriques 11 placés le long d'une ligne horizontale, des capteurs photométriques 12 équipés de filtres colorés pour déterminer les caractéristiques colorimétriques des feux, et une caméra 13 permettant au conducteur du véhicule 2 de suivre facilement la meilleure trajectoire pour contrôler les feux. Il est à noter que, selon une variante possible, les capteurs de couleur peuvent être constitués par un module spectro-colorimètre donnant les coordonnées chromatiques du faisceau du feu de balisage.

Le barreau 5 comprend également des capteurs photométriques de détection de feux 10, dirigés vers le bas, pour déterminer l'instant où le barreau passe au-dessus d'un feu.

Le barreau de mesure 5 comporte également sur sa face arrière une pluralité de capteurs photométriques 51 placés le long d'une ligne horizontale, et des capteurs photométriques 52 équipés de filtres colorés pour déterminer les caractéristiques colorimétriques des feux.

Grâce aux capteurs photométriques placés sur ses faces avant et arrière, le barreau de mesure 5 permet de mesurer en un seul passage au dessus d'une série de feux de balisage les caractéristiques photométriques de faisceaux émis par ces feux dans le sens opposé au sens de déplacement du barreau 5, et dans le sens de déplacement de ce barreau 5.

Ainsi, dans la situation représentée à la figure 3, l'équipement mobile de contrôle est déplacé par le véhicule 2 de façon à contrôler une série de deux feux de balisage 31 et 32, qui émettent chacun un premier faisceau lumineux, respectivement 311 et 321, dans le sens opposé au sens de déplacement du véhicule 2, et un second faisceau lumineux, respectivement 312 et 322, dans le sens du déplacement du véhicule 2.

Quand, comme le représente la figure 3, le barreau de mesure s'approche du feu 32, les capteurs situés sur sa face avant permettent de mesurer le flux lumineux du faisceau 321 que ce feu 32 émet dans le sens opposée au déplacement du barreau. Par la suite, quand le barreau passe au dessus de ce feu 32, les capteurs de détection de feux détectent ce passage, ce qui permet en utilisant des information de vitesse de déplacement, d'associer les mesures de flux lumineux relevées au cours de l'approche à la distance entre les capteurs et le feu 32, pour en déduire l'intensité lumineuse du feu.

Quand un barreau de mesure 5, du type de celui de la figure 5, est utilisé, les capteurs situés sur sa face arrière permettent également de mesurer les caractéristiques photométriques du faisceau 312 qu'un feu 31 émet dans la direction de déplacement du barreau, alors que le barreau de mesure s'éloigne du feu 31, après être passé par dessus. Dans ce cas, les capteurs de détection de feux ayant détecté le passage du barreau au dessus du feu 31, cela permet, en utilisant des information de vitesse de déplacement, d'associer les mesures flux lumineux qui sont par la suite relevées au cours de la poursuite du déplacement du barreau à la distance entre les capteurs et le feu 31, pour en déduire l'intensité lumineuse du feu.

L'usage du barreau 5, comprenant un jeu de capteurs orientés vers l'avant et un jeu de capteurs orientés vers l'arrière, permet donc de contrôler en un seul passage les deux faisceaux émis par les feux bidirectionnels. Ce barreau permet donc de diviser par deux le nombre de parcours de la piste par le véhicule 2 pour un contrôle exhaustif des feux de balisage, ce qui diminue sensiblement le temps durant lequel l'exploitation de la piste doit être interrompue pour le contrôle.

Par ailleurs, la mise en œuvre dans le barreau d'un second jeu de capteurs peut se faire en utilisant un seul groupe de capteurs de détection de feux, un seul moyen de mesures de la distance entre le barreau et le feu, et éventuellement un seul équipement de géolocalisation, les informations données par ces équipements pouvant être utilisées à la fois pour la détermination des caractéristiques photométriques des feux situés devant le barreau et des feux situés derrière le barreau.

Les connexions des différents capteurs mis en œuvre dans le barreau 5 aux modules d'interface 42, ne sont pas représentées sur la figure 5, pour des raisons de clarté. Ces capteurs sont, dans ce mode de réalisation, connectés par l'intermédiaire des modules d'interface 42 à un automate industriel programmable 50 placé dans un compartiment étanche 43, à une extrémité du barreau, qui comme dans le mode de réalisation représenté à la figure 4, traite l'ensemble des données provenant des différents capteurs photométriques et du capteur de mesure de distance, afin de générer un ensemble de données représentatives des caractéristiques de chaque faisceau contrôlé. Cet automate industriel 40 comporte également un module de communication radio, préférablement selon la norme WI-FI (Marque déposée), permettant la transmission du signal unique vers un ordinateur adapté (alternativement un câble de type communication réseau peut connecter l'automate et l'ordinateur).

Le mode de réalisation représenté à la figure 5, dans lequel le barreau de mesure comprend des moyens d'acquisition et de traitement des signaux émis par des capteurs photométriques orientés vers l'avant et vers l'arrière, pour générer un ensemble de données représentatives des caractéristiques photométriques de chaque feu contrôlé, est particulièrement avantageux.

Cependant, il est également possible de mettre en œuvre un barreau présentant un jeu de capteurs photométriques vers l'avant et un jeu de capteurs photométriques vers l'arrière, pour contrôler en un seul passage des feux bidirectionnels, avec une technologie de traitement et de transmission des données différente.

Un équipement mobile de contrôle comprenant un tel barreau peut par exemple mettre en œuvre une technologie de traitement et de transmission des données semblable à celle mise en œuvre dans le barreau 1 de l'art antérieur représenté à la figure 1, dans laquelle les différents capteurs sont connectés à un ordinateur situé dans le véhicule, ou tout autre technologie connue de l'homme du métier. Cette technologie de transmission des données est en effet indépendante de l'avantage procuré par un barreau présentant des capteurs photométriques sur ses faces avant et arrière, qui permet de diminuer le nombre de passage du véhicule sur la piste.

## Revendications

1. Equipement mobile de mesure de caractéristiques photométriques de feux de balisage aéroportuaire, comprenant un barreau de mesure (5) destiné à être déplacé au dessus de feux de balisage (31, 32) à contrôler, dans les faisceaux lumineux émis par ces feux, et des moyens de mesure de la distance entre ledit barreau de mesure et les feux à contrôler, ledit barreau de mesure (5) portant au moins un capteur photométrique (11, 12, 51, 52), ledit barreau de mesure comprenant des moyens d'acquisition et de traitement des signaux émis par ledit ou lesdits capteurs photométriques (11, 12, 51, 52) au cours de son déplacement, en fonction de la distance mesurée entre ledit barreau de mesure et les feux à contrôler, lesdits moyens d'acquisition et de traitement étant aptes à générer un ensemble de données représentatives de caractéristiques photométriques de chaque feu contrôlé, **caractérisé en ce que** ledit barreau de mesure comprend une pluralité de capteurs photométriques (11, 12) orientés vers l'avant et en outre une pluralité de capteurs photométriques (51, 52) orientés vers l'arrière

2. Equipement mobile de mesure selon la revendication 1, **caractérisé en ce que** ledit barreau de mesure constitue une cage de Faraday protégeant lesdits capteurs et/ou lesdits moyens d'acquisition et de traitement des rayonnements électromagnétiques.

3. Equipement mobile de mesure selon l'une quelconque des revendications précédentes, **caractérisé en ce que** ledit ensemble de données représentatives de caractéristiques photométriques de chaque feu contrôlé est un signal de type numérique.

4. Equipement mobile de mesure selon l'une quelconque des revendications précédentes, **caractérisé en ce que** ledit barreau de mesure porte des moyens de transmission desdits ensembles de données vers un ordinateur permettant l'enregistrement desdits ensembles de données et/ou l'interface avec un utilisateur.

5. Equipement mobile de mesure selon la revendication 4, **caractérisé en ce que** lesdits moyens de transmission sont des moyens de transmission radio.

6. Equipement mobile de mesure selon la revendication 5, **caractérisé en ce que** lesdits moyens d'émission radio sont constitués par un émetteur radio répondant à une norme « Wi-Fi » (marque déposée).

7. Equipement mobile de mesure selon l'une quelconque des revendications précédentes, **caractérisé en ce que** ledit barreau de mesure comprend au moins un capteur photométrique (10) de détection de feux orienté vers le bas.

8. Equipement mobile selon la revendication 7, **caractérisé en ce que** lesdits moyens de mesure de la distance entre ledit barreau de mesure et les feux à contrôler comprennent ledit capteur photométrique de détection de feux et des moyens de mesure de la vitesse de déplacement dudit barreau de mesure.

9. Equipement mobile de mesure selon l'une quelconque des revendications précédentes, **caractérisé en ce que** ledit barreau de mesure comprend des moyens d'analyse colorimétrique des feux contrôlés.

10. Equipement mobile de mesure selon l'une quelconque des revendications précédentes, **caractérisé en ce que** lesdits moyens de traitement sont constitués par un automate programmable industriel placé dans ledit barreau de mesure.

11. Equipement mobile de mesure selon l'une quelconque des revendications précédentes, **caractérisé en ce qu'**il comprend un récepteur de géolocalisation, permettant d'associer chaque ensemble de données représentatif des caractéristiques photométriques d'un feu aux coordonnées de géolocalisation de ce feu.

## Patentansprüche

1. Mobiles Gerät zur Messung der photometrischen Eigenschaften von Flughafenbefeuerungen, umfassend einen Messstab (5), der dazu bestimmt ist, über zu prüfenden Befeuerungen (31, 32) in den von diesen Befeuerungen emittieren Lichtstrahlen bewegt zu werden, und Mittel zum Messen des Abstandes zwischen dem Messstab und den zu prüfenden Befeuerungen, wobei der Messstab (5) mindestens einen photometrischen Sensor (11, 12, 51, 52) trägt, wobei der Messstab Mittel zum Erfassen und zum Verarbeiten der Signale aufweist, die von dem oder den photometrischen Sensoren (11, 12, 51, 52) während seiner Bewegung in Abhängigkeit des Abstands, der zwischen dem Messstab und den zu prüfenden Befeuerungen gemessen wird, abgegeben werden, wobei die Mittel zum Erfassen und zum Verarbeiten dazu geeignet sind, einen für die photometrischen Eigenschaften jeder kontrollierten Befeuerung repräsentativen Datensatz zu erzeugen, , **dadurch gekennzeichnet, dass** der Messstab mehrere photometrische Sensoren (11, 12), die nach vorne gerichtet sind, und ferner mehrere photometrische Sensoren (51, 52), die nach hinten gerichtet sind, aufweist.

2. Mobiles Gerät zur Messung nach Anspruch 1, **dadurch gekennzeichnet, dass** der Messstab einen faradayschen Käfig bildet, der die Sensoren und/oder die Mittel zum Erfassen und zum Verarbeiten vor elektromagnetischer Strahlung schützt.

3. Mobiles Gerät zur Messung nach einem der vorhergehenden Ansprüche, **dadurch gekennzeichnet, dass** der für die photometrischen Eigenschaften jeder kontrollierten Befeuerung repräsentative Datensatz vom Typ ein digitales Signal ist.

4. Mobiles Gerät zur Messung nach einem der vorhergehenden Ansprüche, **dadurch gekennzeichnet, dass** der Messstab Mittel zum Übertragen des Datensatzes an einen Computer trägt, der das Aufzeichnen der Datensätze und/oder die Schnittstelle zu einem Benutzer ermöglicht.

5. Mobiles Gerät zur Messung nach Anspruch 4, **dadurch gekennzeichnet, dass** die Mittel zum Übertragen Funkübertragungsmittel sind.

6. Mobiles Gerät zur Messung nach Anspruch 5, **dadurch gekennzeichnet, dass** die Funkübertragungsmittel aus einem Funksender bestehen, der einem "Wi-Fi"-Standard (eingetragenes Warenzeichen) entspricht.

7. Mobiles Gerät zur Messung nach einem der vorhergehenden Ansprüche, **dadurch gekennzeichnet, dass** der Messstab mindestens einen photometrischen Sensor (10) zum Erfassen von Befeuerungen aufweist, der nach unten gerichtet ist.

8. Mobiles Gerät zur Messung nach Anspruch 7, **dadurch gekennzeichnet, dass** die Mittel zum Messen des Abstandes zwischen dem Messstab und den zu prüfenden Befeuerung den photometrischen Sensor zum Erfassen von Befeuerungen und Mittel zum Messen der Bewegungsgeschwindigkeit des Messstabs aufweisen.

9. Mobiles Gerät zur Messung nach einem der vorhergehenden Ansprüche, **dadurch gekennzeichnet, dass** der Messstab Mittel zur kalorimetrischen Analyse der kontrollierten Befeuerungen aufweist.

10. Mobiles Gerät zur Messung nach einem der vorhergehenden Ansprüche, **dadurch gekennzeichnet, dass** die Mittel zum Verarbeiten als eine speicherprogrammierbare Steuerung ausgebildet sind, die in dem Messstab angeordnet ist.

11. Mobiles Gerät zur Messung nach einem der vorhergehenden Ansprüche, **dadurch gekennzeichnet, dass** es einen Geolokalisierungsempfänger aufweist, der ermöglicht, jeden Datensatz, der für die photometrischen Eigenschaften einer Befeuerung repräsentativ ist, mit den Geolokalisierungskoordinaten dieser Befeuerung zu verbinden.

## Claims

1. A mobile apparatus for measuring the photometric characteristics of airport marker lights, the mobile apparatus comprising a measuring rod (5) designed to be moved above the marker lights (31, 32) to be checked, in the light beams emitted by these marker lights, and means for measuring the distance between said measuring rod and the marker lights to be checked, said measuring rod (5) carrying at least one photometric sensor (11, 12, 51, 52),
said measuring rod comprises means for acquiring and processing the signals emitted by said photometric sensor or sensors (11, 12, 51, 52) during its movement, as a function of the distance measured between said measuring rod and the marker lights to be checked, said means of acquisition and processing being capable of generating a set of data representing photometric characteristics of each marker light checked, **characterized in that** said measuring rod comprises a plurality of frontward-oriented photometric sensors (11, 12) and furthermore comprises a plurality of rearward-oriented photometric sensors (51, 52).

2. Mobile measurement apparatus according to claim 1, **characterized in that** said measuring rod constitutes a Faraday cage protecting said sensors and/or said means of acquisition and processing against electromagnetic radiation.

3. Mobile measurement apparatus according to any one of the preceding claims, **characterized in that** said set of data representing the photometric characteristics of each checked marker light is a digital signal.

4. Mobile measurement apparatus according to any one of the preceding claims, **characterized in that** said measuring rod carries means for transmitting said set of data to a computer enabling the recording of said sets of data and/or to the interface with a user.

5. Mobile measurement apparatus according to claim 4, **characterized in that** said means of transmission are means of radio transmission.

6. Mobile measurement apparatus according to claim 5, **characterized in that** said radio sending means are constituted by a radio transmitter complying with a WiFi (registered mark) standard.

7. Mobile measurement apparatus according to any one of the preceding claims, **characterized in that** said measuring rod comprises at least one photometric sensor (10) for detecting downward-oriented marker lights.

8. Mobile apparatus according to claim 7, **characterized in that** said means for measuring the distance between said measuring rod and the lights to be checked include said photometric sensor for detecting marker lights and means for measuring the speed of movement of said measuring rod.

9. Mobile measurement apparatus according to any one of the above claims, **characterized in that** said measuring rod comprises means for colorimetric analysis of the marker lights checked.

10. Mobile measurement apparatus according to any one of the preceding claims, **characterized in that** said means of processing are constituted by an industrial programmable automaton placed in said measuring rod.

11. Mobile measurement apparatus according to any one of the preceding claims, **characterized in that** it comprises a geolocation receiver enabling each set of data representing the photometric characteristics of a marker light to be associated with the geolocation coordinates of this marker light.
